# EUROPÄISCHE PATENTSCHRIFT

(11) **EP 3 071 488 B1**
(45) Veröffentlichungstag und Bekanntmachung des Hinweises auf die Patenterteilung: **25.10.2017**
(21) Anmeldenummer: 14806561.8
(22) Anmeldetag: 20.11.2014
(51) Int. Cl.: B65B 69/00, B25J 15/00, B25J 15/02

(54) **ROBOTERWERKZEUG ZUR AUTOMATISIERTEN ENTFERNUNG VON VERPACKUNGSUMGREIFUNGEN**
ROBOT TOOL FOR AUTOMATIC REMOVAL OF PACKAGE BINDING MATERIAL
OUTIL ROBOT POUR LA ELIMINATION AUTOMATIQUE D'ENRUBANAGES DE BALLES

(30) Priorität: 21.11.2013 AT 507722013
(43) Veröffentlichungstag der Anmeldung: 28.09.2016
(73) Patentinhaber: CTS GMBH COMPETENCE FOR TECHNICAL SOLUTIONS, 84508 Burgkirchen (DE)
(72) Erfinder: RUSU, Dorin-Eusebiu, A-4690 Schwanenstadt (AT); BAMMER-SCHUR, Lucas, A-4810 Gmunden (AT)
(74) Vertreter: Schwarz & Partner Patentanwälte OG
(86) Internationale Anmeldenummer: PCT/EP2014/075081
(87) Internationale Veröffentlichungsnummer: WO 2015/075101

(56) Entgegenhaltungen:
- WO-A1-2004/028906
- CA-C- 1 313 991
- JP-A- H0 329 730
- US-A1- 2007 044 603

## Beschreibung

Die Erfindung betrifft ein Roboterwerkzeug für einen Roboter zum automatisierten Entfernen von Verpackungsumgreifungen eines Packgutes mit einer Abtrenneinrichtung zum Durchtrennen der Verpackungsumgreifung und mit einer Aufrolleinrichtung zum Aufrollen der durchtrennten Verpackungsumgreifung.

Die Erfindung betrifft weiters ein Verfahren zum automatisierten Entfernen von Verpackungsumgreifungen eines Packgutes durch ein Roboterwerkzeug eines Roboters.

Das Dokument US8,160,748B2 offenbart ein derartiges Roboterwerkzeug und ein derartiges Verfahren. Dem offenbarten Roboter werden auf einem Fließband Ballen von Papier als Packgut zugeführt, die mit einer Schnur oder einem Draht als Verpackungsumgreifung zusammen gehalten werden. Der Roboter weist einen Roboterarm auf, an dem das Roboterwerkzeug montiert ist und mit dem das Roboterwerkzeug durch eine Kamera, Abstandssensoren und eine Robotersteuerung gesteuert an den Ballen zu den Schnüren herangeführt werden kann.

Der offenbarte Roboter weist weiters ein Schneidwerkzeug zum Abschneiden der Schnüre auf, das eine Abtrenneinrichtung bildet. Das Schneidwerkzeug ist an einer Seitenfläche des quaderförmigen Roboterwerkzeugs angeordnet, in der auch die Kamera und zwei Abstandssensoren zum Heranführen des Schneidwerkzeugs an die Schnur vorgesehen sind.

Der offenbarte Roboter weist weiters eine Spindel als Aufrolleinrichtung auf, die an einer Bodenfläche des quaderförmigen Roboterwerkzeugs angeordnet ist. Mittels der Kamera und vier Führungsstiften wird das Roboterwerkzeug mit der Spindel an die abgeschnittene Schnur herangeführt. Die Spindel ist durch einen offenen Zylinder gebildet, der an seiner Mantelfläche vier schräg verlaufende Nuten aufweist. Nach dem Heranführen der Spindel an die abgeschnittene Schnur wird die Spindel um ihre Rotationsachse in Rotation versetzt, worauf sich die Schnur in den Nuten verfängt und am Umfang der Spindel zu einer Rolle aufgerollt wird.

Bei dem bekannten Roboterwerkzeug und dem bekannten Verfahren zum automatisierten Entfernen von Verpackungsumgreifungen hat sich als Nachteil erwiesen, dass vorerst alle den Ballen zusammenhaltenden Schnüre mit dem Schneidwerkzeug abgeschnitten werden und erst anschließend die abgeschnittenen Schnüre mit der Spindel nacheinander aufgerollt und von dem Ballen entfernt werden. Hierfür muss vorerst das Schneidwerkzeug mittels Kamera und Sensoren an die erste und dann an alle weiteren Schnüre herangeführt werden, um diese abzuschneiden. Je nach Vorspannung und Materialeigenschaften der Schnüre, sowie je nach Art des Schneidvorgangs kommen die losen Enden der Schnur nach dem Schneidvorgang irgendwo auf dem Ballen oder gegebenenfalls sogar auf dem Förderband zu liegen. Zum Aufrollen der abgeschnittenen Schnüre muss das Roboterwerkzeug nun aber neuerlich, diesmal mit der Spindel, vorerst an die eine und nachher an die anderen Schnüre herangeführt werden. Je nach aktueller Lage der Schnüre kann dies schwierig oder sogar unmöglich sein, weshalb eine Bedienperson öfters unterstützend eingreifen muss.

Weiters hat sich als Nachteil erwiesen, dass das automatische Entfernen der Schnüre von dem Ballen mit dem bekannten Roboter einen großen Zeitaufwand je Ballen erfordert. Insbesondere das mehrfache Heranführen des Roboterwerkzeugs an die Schnüre, aber auch das gegebenenfalls nötige manuelle Eingreifen ermöglicht einen nur geringen Durchsatz an Ballen mit dem Fließband.

Eine weitere gattungsgemäße Vorrichtung zum Entfernen eines Drahtes von einem Ballen ist Gegenstand des kanadischen Patents CA 1,313,991.

Der Erfindung liegt die Aufgabe zugrunde ein Roboterwerkzeug der im ersten Absatz genannten Gattung dahingehend zu verbessern, dass die vorstehend angeführten Nachteile vermieden werden. Erfindungsgemäß wird diese Aufgabestellung bei dem Roboterwerkzeug gemäß Anspruch 1 gelöst. Hilfreich zum Verständnis der Erfindung ist, dass bei einem Verfahren zum automatisierten Entfernen von Verpackungsumreifungen folgende Verfahrensschritte durchgeführt werden können:
Heranführen des Roboterwerkszeugs an die Verpackungsumgreifung mittels eines Kamerasystems;
Greifen und Halten der Verpackungsumgreifung mit einer Halteeinrichtung;
Durchtrennen der gehaltenen Verpackungsumgreifung mit einer Abtrenneinrichtung;
Aufrollen der ununterbrochen gehaltenen durchtrennten Verpackungsumgreifung auf einer drehbar gelagerten Spindel;
Ausstoßen der auf der Spindel aufgewickelten Rolle der Verpackungsumgreifung.

Hierdurch ist der Vorteil erhalten, dass der Roboter das Roboterwerkzeug nur einmal an die zu entfernende Verpackungsumgreifung heranführen muss, um diese von dem Packgut zu entfernen. Da die Verpackungsumgreifung während des gesamten Abtrenn- und Aufwickelvorgangs ununterbrochen von der Halteeinrichtung gehalten wird ist sichergestellt, dass die Verpackungsumgreifung nicht in das Förderband kommen kann und auch nicht von dem Packgut abrutscht und bei einem neuerlichen Heranfahren nur schwer gegriffen und aufgerollt werden kann.

Durch das nur einmalige Heranführen des Roboterwerkzeugs kann der Durchsatz an Packstücken je Stunde, denen die Verpackungsumgreifung automatisch entfernt wird, wesentlich erhöht werden, wodurch die Rentabilität des Roboters steigt.

Als vorteilhaft hat sich weiters erwiesen eine Spindel mit einer Nut vorzusehen, in der zwei rautenförmige Greifzangen als Halteeinrichtung enthalten sind. Hierdurch wird die Verpackungsumgreifung durch die Rautenform der Greifzangen beim Schließen der Greifzangen vom Packgut angehoben und in die Nut hinein gezogen. Anschließend wird zusätzlich die Spindel vom Packgut angehoben. Hierdurch ist sichergestellt, dass die beim Aufrollen der Verpackungsumgreifung sich drehende Spindel das Packgut nicht beschädigt.

Weitere vorteilhafte Ausgestaltungen des erfindungsgemäßen Roboterwerkzeugs und des erfindungsgemäßen Verfahrens werden im Folgenden anhand der Figuren näher erläutert.
Figur 1 zeigt ein Roboterwerkzeug gemäß einem Ausführungsbeispiel der Erfindung in einer Schrägansicht.
Figur 2 zeigt das Roboterwerkzeug gemäß Figur 1 in einer weiteren Schrägansicht.
Figur 3 zeigt die Spindel samt Greifzangen des Roboterwerkszeugs gemäß Figur 1.
Figur 4 zeigt die Greifzangen des Roboterwerkzeugs gemäß Figur 1.
Figur 5 zeigt die Spindel samt Stator des Roboterwerkzeugs gemäß Figur 1.
Figur 6 zeigt den Ausstoßer auf der Spindel des Roboterwerkzeugs gemäß Figur 1.

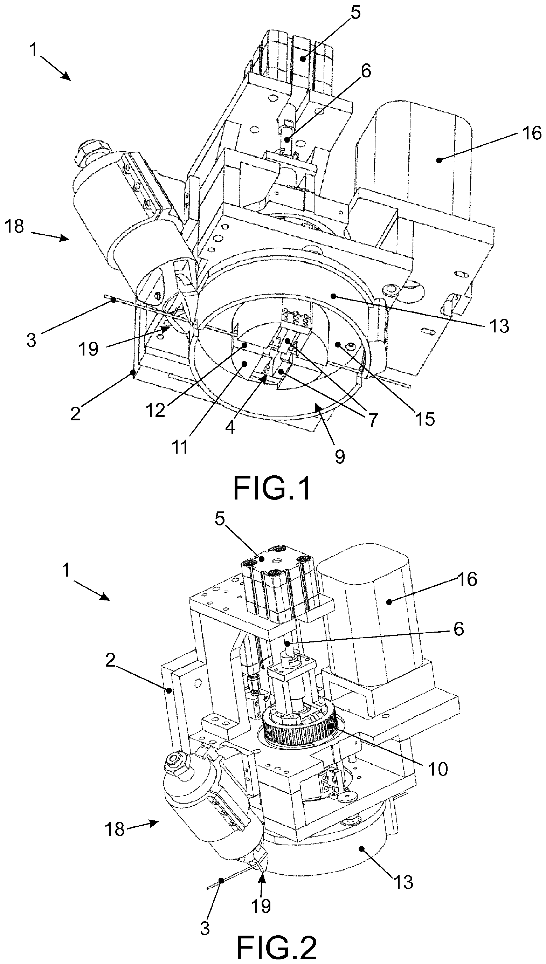

Figur 1 zeigt ein Roboterwerkzeug 1 für einen Roboter zum automatisierten Entfernen von Verpackungsumgreifungen eines Packgutes. Solche Roboter sind üblicherweise als Knickarmroboter ausgeführt, die einen durch Servomotoren verstellbaren Roboterarm aufweisen, an dem das Roboterwerkzeug 1 mit einer Halteplatte 2 festgeschraubt ist. Ein Kamerasystem liefert seine Bilddaten an einen Steuercomputer, der das Roboterwerkzeug 1 in die für den nächsten Arbeitsschritt nötige räumliche Lage zu dem Packgut hin positioniert. Dem Fachmann sind aber auch Deltaroboter oder andere Roboter bekannt, die das Roboterwerkzeug 1 an das Packgut heranführen könnten.

Beispielweise in dem Dokument US8,160,748B2 ist so ein Roboter beschrieben, dem über ein Fließband Packgut zugeführt wird. Als Packgut kommen hierbei Zellstoffballen, Textilballen, Papierstapel oder andere Güter in Frage, die für den Transport mit Verpackungsumgreifungen (z.B.: Schnüren, Bändern oder Drähten) zusammen gehalten werden. Um diese Packgüter nach dem Transport wieder vereinzeln zu können werden sie dem Roboter zum Entfernen der Verpackungsumgreifung zugeführt.

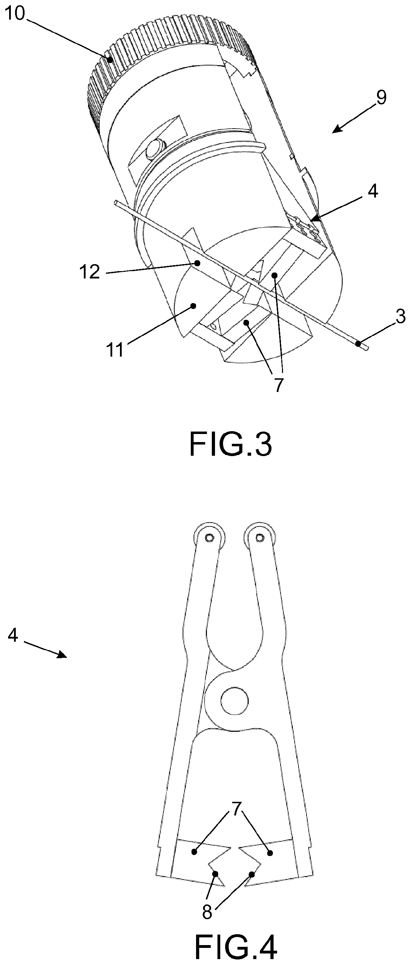

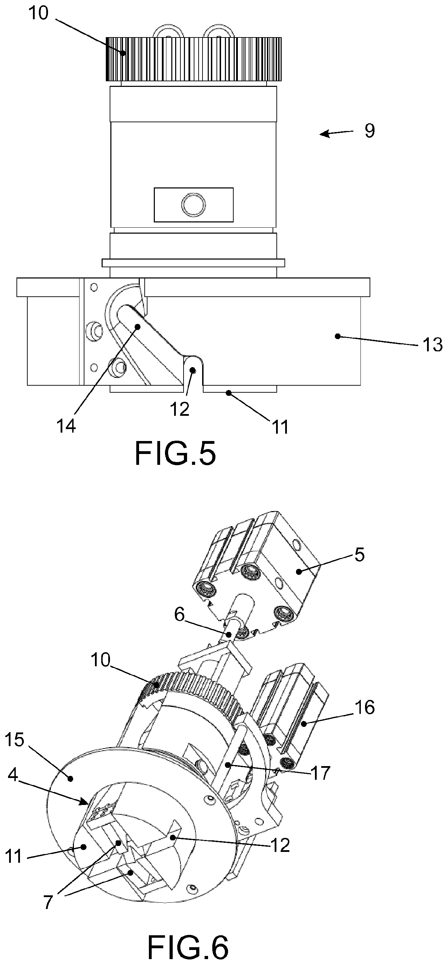

In den Figuren 1 und 2 ist das Roboterwerkzeug 1 zusammengebaut in zwei unterschiedlichen Schrägansichten dargestellt. In den Figuren 3 bis 6 sind einzelne Teile beziehungsweise funktionelle Einheiten des Roboterwerkzeugs 1 zum besseren Verständnis dargestellt. Das in den Figuren dargestellte Ausführungsbeispiel des erfindungsgemäßen Roboterwerkzeugs 1 dient zum Durchtrennen und Aufrollen eines Drahtes 3, der eine Verpackungsumgreifung bildet.

Hierfür weist das Roboterwerkzeug 1 eine Halteeinrichtung auf, die durch eine Greifzange 4 und einen durch den Steuercomputer aktivierten Pneumatikzylinder 5 zum Öffnen und Schließen der Greifzange 4 gebildet ist. Eine durch den Pneumatikzylinder 5 angetriebene Achse 6 übt eine Kraft auf die Greifzange 4 aus, um die Greifzange 4 zu öffnen. Die Greifzange 4 weist zwei rautenförmige Greifzangen 7 auf, die beim Schließen zum Anheben des Drahtes 3 von dem Packgut und zum Halten des angehobenen Drahtes 3 ausgebildet ist. Dies wird durch die beiden Flächen 8 erreicht, entlang denen der Draht 3 beim Schließen geführt wird.

Das Roboterwerkzeug 1 weist weiters eine drehbar gelagerte Spindel 9 auf, die eine Aufrolleinrichtung zum Aufrollen des durchtrennten Drahtes 3 bildet. Die Spindel 9 wird über einen Motor 16 angetrieben, der über einen Zahnriemen in ein Zahnrad 10 der Spindel 9 eingreift. Die Spindel 9 weist eine Zylinderendfläche 11 auf, in der eine Nut 12 zum Aufnehmen des Drahtes 3 vorgesehen ist. Die Greifzange 4 ist rotationssymmetrisch zur Rotationsachse der Spindel 9 in der Spindel 9 vorgesehen, wobei ihre Greifzangen 7 den Draht 3 in die Nut 12 anheben beziehungsweise hineinziehen.

Das Roboterwerkzeug 1 weist weiters einen Stator 13 auf, der an dem Roboterwerkzeug 1 unverdrehbar befestigt ist. Der Stator 13 ist in Richtung der Rotationsachse der Spindel 9 federnd gelagert und die Spindel 9 umgebend angeordnet. Der Stator 13 weist eine zur Rotationsachse der Spindel 9 schräg verlaufende Nut 14 auf, durch die der durchtrennte Draht 3 bei rotierender Spindel 9 auf einen von dem Packgut entfernten Umfangsbereich der Spindel 9 zu einer Rolle aufgerollt wird.

Das Roboterwerkzeug 1 weist weiters einen kreisringförmiger Ausstoßer 15 auf, der zum Ausstoßen einer auf die Spindel 9 aufgerollten Rolle des Drahts 3 ausgebildet ist. Hierfür schiebt ein Pneumatikzylinder mittels Führungsstiften 17 den Ausstoßer 15 entlang der Mantelfläche der Spindel 9, bis die Rolle von der Spindel 9 fällt.

Das Roboterwerkzeug 1 weist weiters eine Abtrenneinrichtung 18 auf, die durch einen Pneumatikzylinder angetriebene Zangen eines Seitenschneiders 19 aufweist, um den Draht 3 zu durchtrennen. Die Abtrenneinrichtung 18 ist an dem Roboterwerkzeug 1 außerhalb des Stators 13 angeordnet.

Die Funktion des Roboterwerkzeugs 1 wird nunmehr anhand eines Anwendungsbeispiels des Roboters zum automatisierten Entfernen der Drähte 3 näher erläutert. Es sein angenommen, dass ein im Wesentlichen quaderförmiger Ballen Zellstoff mit mehreren Drähten 3 zusammengehalten wird. Mehrere dieser Ballen werden dem Roboter auf dem Förderband zugeführt. Das Kamerasystem des Roboters erkennt die Lage des jeweiligen in den Arbeitsbereich transportierten Ballens und die Lage der Drähte 3 auf dem Ballen.

Bei einem ersten Verfahrensschritt führt der Roboter das Roboterwerkzeug 1 mittels des Kamerasystems, gesteuert durch den Steuercomputer, an den ersten Draht 3 heran. Hierbei positioniert der Roboter das Roboterwerkzeug 1 so, dass die Spindel 9 mit der Zylinderendfläche 11 an die Oberfläche des Zellstoffs gedrückt wird und der Draht 3 in der Nut 12 zu liegen kommt. Während dieses Verfahrensschrittes sind die Greifzangen 7 geöffnet.

Bei einem zweiten Verfahrensschritt werden die Greifzangen 7 durch den Steuercomputer aktiviert geschlossen, wodurch der Draht 3 von der Oberfläche des Zellstoffs abgehoben und in weiterer Folge von der Greifzange 4 in der Rotationsachse der Spindel 9 gehalten wird. Während dieses Verfahrensschrittes sind die Zangen 19 der Abtrenneinrichtung 18 geöffnet, weshalb der von der Greifzange 4 gehaltene Draht 3 zwischen den geöffneten Zangen 19 zu liegen kommt.

Bei einem dritten Verfahrensschritt aktiviert der Steuercomputer den Pneumatikzylinder der Abtrenneinrichtung 18 und durchtrennt den von der Greifzange 4 gehaltenen Draht 3 auf der der Nut 14 gegenüberliegenden Seite des Stators 13. Anschließend wird das Roboterwerkzeug 1 durch eine vertikale Bewegung des Roboterarms um einige Millimeter angehoben, um die Spindel 9 in Richtung ihrer Rotationsachse um einige Millimeter von dem Packgut abzuheben. Bei dieser vertikalen Bewegung hält der Stator 13 durch seine gefederte Lagerung den Kontakt zum Zellstoff aufrecht. Hierdurch ist sichergestellt, dass sich die Spindel 9 in einem geschlossenen Wickelbereich (Stator-Zellstoff) frei drehen kann, ohne die Oberfläche des Packgutes zu beschädigen.

Bei einem vierten Verfahrensschritt wird die Spindel 9 über das Zahnrad 10 im Uhrzeigersinn in Rotation versetzt, wodurch der von der Greifzange 4 ununterbrochen gehaltene Draht 3 durch die Nut 14 des Stators 13 auf der Spindel 9 aufgerollt wird. Die Nut 14 bewirkt, dass der Draht 3 hierbei nach oben beziehungsweise auf den von dem Packgut entfernteren Bereich der Spindel 9 zuerst aufgerollt wird. Erst bei zunehmender Dicke der sich auf der Spindel 9 innerhalb des Stators 13 bildenden Drahtrolle 3 bildet sich die Rolle auf der Spindel 9 weiter in Richtung des Packgutes aus, bis der gesamte Draht 3 aufgerollt ist.

Bei einem fünften Verfahrensschritt positioniert der Roboter gesteuert vom Steuercomputer das Roboterwerkzeug 1 über einem Behälter neben dem Förderband zum Sammeln der Rollen Draht 3. Anschließend werden die Greiferzangen 7 durch das Einfahren des Pneumatikzylinders 5 geöffnet. Abschließend aktiviert der Steuercomputer den Pneumatikzylinder 16, wodurch der kreisringförmige Ausstoßer 15 die Rolle Draht 3 von der Spindel 9 schiebt, bis sie in den Behälter fällt. Diese fünf Verfahrensschritte werden bei allen weiteren Drähten 3 des Ballens durchgeführt, bis sämtliche Verpackungsumgreifungen von dem Packgut entfernt sind.

Durch die Verwendung des Roboterwerkzeugs 1 und die Durchführung des vorstehend beschriebenen Verfahrens zum automatisierten Entfernen von Verpackungsumgreifungen eines Packgutes ist der Vorteil erhalten, dass die Verpackungsumgreifung immer sicher gehalten wird, bis diese aufgerollt ist. Das Roboterwerkzeug 1 muss von dem Roboter nur einmal an die Verpackungsumgreifung herangeführt werden, weshalb der Durchsatz an bearbeiteten Packgütern wesentlich erhöht werden kann.

Es kann erwähnt werden, dass Hydraulikzylinder oder elektrische Servomotoren zum Antreiben der Halteeinrichtung und/oder der Abtrenneinrichtung und/oder des Ausstoßers vorgesehen sein könnten. Die Halteeinrichtung und die Greiferzangen könnten gemäß weiteren Ausführungsbeispielen der Erfindung in Bezug auf Größe, Winkel und Anzahl variieren.

## Patentansprüche

1. Roboterwerkzeug (1) für einen Roboter zum automatisierten Entfernen von Verpackungsumgreifungen (3) eines Packgutes mit
einer Abtrenneinrichtung (18) zum Durchtrennen der Verpackungsumgreifung (3) und mit einer Aufrolleinrichtung (9) zum Aufrollen der durchtrennten Verpackungsumgreifung (3), **dadurch gekennzeichnet, dass**
eine Halteeinrichtung (4) vorgesehen ist, welche zwei rautenförmige Greifzangen (7) aufweist, die zum Anheben der Verpackungsumgreifung (3) von dem Packgut und zum ununterbrochenen Halten der angehobenen Verpackungsumgreifung (3) während des Abtrenn- und Aufwickelvorgangs der Verpackungsumgreifung (3) ausgebildet sind.

2. Roboterwerkzeug (1) gemäß Anspruch 1, **dadurch gekennzeichnet, dass** eine drehbar gelagerte motorisch antreibbare Spindel (9) vorgesehen ist, die eine Nut (12) zum Aufnehmen der Verpackungsumgreifung (3) aufweist, wobei die Halteeinrichtung (4) zum Halten der Verpackungsumgreifung (3) in der Nut (12) ausgebildet ist.

3. Roboterwerkzeug (1) gemäß Anspruch 1, **dadurch gekennzeichnet, dass** die Greifzangen (7) rotationssymmetrisch zur Rotationsachse der Spindel (9) angeordnet und zum Halten der Verpackungsumgreifung (3) in der Rotationsachse der Spindel (9) ausgebildet sind.

4. Roboterwerkzeug (1) gemäß einem der Ansprüche 2 bis 3, **dadurch gekennzeichnet, dass** ein an dem Roboterwerkzeug (1) unverdrehbar befestigter, in Richtung der Rotationsachse der Spindel (9) federnd gelagerter Stator (13) vorgesehen ist, der die Spindel (9) umgebend angeordnet ist.

5. Roboterwerkzeug (1) gemäß Anspruch 4, **dadurch gekennzeichnet, dass** der Stator (13) eine zur Rotationsachse der Spindel (9) schräg verlaufende Nut (14) aufweist, durch die die durchtrennte Verpackungsumgreifung (3) bei rotierender Spindel (9) auf einen von dem Packgut entfernten Umfangsbereich der Spindel (9) zu einer Rolle aufgerollt wird.

6. Roboterwerkzeug (1) gemäß einem der Ansprüche 2 bis 5, **dadurch gekennzeichnet, dass** ein insbesondere kreisringförmiger Ausstoßer (15) vorgesehen ist, der zum Ausstoßen einer auf die Spindel (9) aufgerollten Rolle der Verpackungsumgreifung (3) ausgebildet ist.

7. Roboterwerkzeug (1) gemäß einem der vorherigen Ansprüche, **dadurch gekennzeichnet, dass** zumindest ein Pneumatikzylinder (5) vorgesehen ist, der zum pneumatischen Antreiben der Halteeinrichtung (4) und/oder der Abtrenneinrichtung (18) und/oder des Ausstoßers (15) ausgebildet ist.

## Claims

1. A robot tool (1) for a robot for automatic removal of package binding materials (3) of a packaged good having a separating device (18) for severing the package binding material (3) and having a roll-up device (9) for rolling up the severed package binding material (3), **characterized in that**
there is provided a holding device (4), which has two rhombic gripping tongs (7), which are designed for lifting the package binding material (3) from the packaged good and for continuously holding the lifted package binding material (3) during the process of severing and rolling up the package binding material (3).

2. A robot tool (1) according to claim 1, **characterized in that** there is arranged a rotatably mounted and motor-driven spindle (9), which has a groove (12) for receiving the package binding material (3), wherein the holding device (4) is designed for holding the package binding material (3) within the groove (12).

3. A robot tool (1) according to claim 1, **characterized in that** the gripping tongs (7) are arranged in rotational symmetry with the rotational axis of the spindle (9) and designed for holding the package binding material (3) in the rotational axis of the spindle (9).

4. A robot tool (1) according to any of claims 2 to 3, **characterized in that** there is provided a stator (13) that is non-rotatably attached to the robot tool (1) and spring-mounted in the direction of the rotational axis of the spindle (9), which is arranged such that it is surrounding the spindle (9).

5. A robot tool (1) according to claim 4, **characterized in that** the stator (13) has a groove (14) extending inclined to the rotational axis of the spindle (9), by which the severed package binding material (3) is rolled up, with the spindle rotating, into a roll onto a circumferential area of the spindle (9) that is spaced apart from the packaged good.

6. A robot tool (1) according to any of claims 2 to 5, **characterized in that** there is provided in particular an annular ejector (15), which is designed for ejecting a roll of the package binding material (3) rolled-up onto the spindle (9).

7. A robot tool (1) according to any of the preceding claims, **characterized in that** there is provided at least a pneumatic cylinder (5), which is designed for pneumatically driving the holding device (4) and/or the severing device (18) and/or the ejector (15).

## Revendications

1. Outil robot (1) pour un robot destiné à l'élimination automatique d'enrubannages (3) d'une marchandise avec un dispositif de coupe (18) pour couper l'enrubannage (3) et avec un dispositif d'enroulement (9) pour enrouler l'enrubannage coupé (3), **caractérisé en ce qu'**il est prévu un dispositif de maintien (4), qui présente deux pinces en forme de losange (7), qui sont configurées pour soulever l'enrubannage (3) de la marchandise et pour maintenir sans interruption l'enrubannage soulevé (3) pendant l'opération de coupe et d'enroulement de l'enrubannage (3).

2. Outil robot (1) selon la revendication 1, **caractérisé en ce qu'**il est prévu une broche (9) pouvant être entraînée en rotation par un moteur, qui présente une rainure (12) destinée à recevoir l'enrubannage (3), dans lequel le dispositif de maintien (4) est configuré pour maintenir l'enrubannage (3) dans la rainure (12).

3. Outil robot (1) selon la revendication 1, **caractérisé en ce que** les pinces (7) sont disposées de façon symétrique en rotation autour de l'axe de rotation de la broche (9) et sont configurées pour maintenir l'enrubannage (3) dans l'axe de rotation de la broche (9).

4. Outil robot (1) selon une des revendications 2 à 3, **caractérisé en ce qu'**il est prévu sur l'outil robot (1) un stator fixé sans pouvoir tourner et suspendu dans la direction de l'axe de rotation de la broche (9), qui est disposé de façon à entourer la broche (9).

5. Outil robot (1) selon la revendication 4, **caractérisé en ce que** le stator (13) présente une rainure (14) s'étendant en oblique par rapport à l'axe de rotation de la broche (9), par laquelle l'enrubannage coupé (3) est enroulé en une bobine, lorsque la broche (9) tourne, sur une région périphérique de la broche (9) éloignée de la marchandise.

6. Outil robot (1) selon l'une quelconque des revendications 2 à 5, **caractérisé en ce qu'**il est prévu un éjecteur notamment annulaire rond (15), qui est configuré pour éjecter une bobine de l'enrubannage (3) enroulée sur la broche (9).

7. Outil robot (1) selon l'une quelconque des revendications précédentes, **caractérisé en ce qu'**il est prévu au moins un cylindre pneumatique (5), qui est configuré pour l'entraînement pneumatique du dispositif de maintien (4) et/ou du dispositif de coupe (18) et/ou de l'éjecteur (15).
